# EUROPÄISCHE PATENTANMELDUNG

(11) **EP 1 882 960 A2**
(43) Veröffentlichungstag der Anmeldung: **30.01.2008**
(21) Anmeldenummer: 07022484.5
(22) Anmeldetag: 11.09.2003

(54) **Einstellbares Pinhole**

(30) Priorität: 24.09.2002 DE 10244850
(62) Teilanmeldung aus: 03020426.7
(71) Anmelder: Carl-Zeiss Jena GmbH, 07745 Jena (DE)
(72) Erfinder: Bartzke, Karlheinz, Dr., 07749 Jena (DE); Hofmann, Jens, Dr., 99510 Apolda (DE); Klopfleisch, Karl-Heinz, 07745 Jena (DE); Wolleschensky, Ralf, Dipl.-Phys., 07743 Jena (DE)
(74) Vertreter: Geyer, Fehners & Partner

(57) **Zusammenfassung**

Einstellbares Pinhole, insbesondere für den Beleuchtungs- und/ oder Detektionsstrahlengang eines Laser- Scanning- Mikroskopes,
wobei die Pinholeöffnung durch zueinander verstellbare Folienkanten begrenzt wird und vorteilhaft mindestens zwei Folien mit jeweils mindestens einer geraden Kante so zueinander angeordnet werden und / oder miteinander verbunden sind , daß ihre Kanten eine L- Form beschreiben und die L- förmigen Verbindungsstücke so aufeinander angeordnet werden, daß sie einen rhombischen oder quadratischen Lichtdurchtritt umgrenzen und sie zueinander zur Pinholeverstellung bewegt werden.

## Beschreibung

In DE 20205079 U1 ist ein scherenartiger Verschlußmechanismus für ein Pinhole beschrieben.

Hier ist vor allem die Fertigungsgenauigkeit der Winkelstellen, die sich gegenüberstehen und über die Drehachse gegeneinander bewegt werden sollen, ein ernsthaftes Hindernis für eine reproduzierbare und lichtdichte Schließung und exakte quadratische Form der Pinholeöffnung.

Die Aufgabe besteht darin, ein hochgenaues Pinhole zu entwickeln, das sich lichtdicht verschließen läßt und dessen Öffnung ab der Größe Null eine quadratische Form aufweist.

Erfindungsgemäß wird dieses Problem gelöst, indem eine Anordnung aus Folienkanten, deren zur Pinholeöffnung zeigenden Kanten vorzugsweise geschliffen sind, gemäß den erfinderischen Ausführungen relativ zueinander bewegt werden. Die Gestaltung der Pinholeöffnung aus Folienkanten bietet den entscheidenden Vorteil, daß die Ecken der Pinholeöffnung vollkommen scharfkantig sind und der Krümmungsradius der Ecken null ist. Hierdurch lassen sich Pinholeöffnungen ab Größe Null reproduzierbar einstellen.
Das Vorfertigen der Folienkanten kann bereits hochgenau erfolgen, beispielsweise durch Schneiden mit Diamantschneiden oder durch Laserschneiden oder durch Ätzen.
Zur vorzugsweisen Bewegung, die sehr exakt und spielfrei ablaufen sollte, sind Festkörpergelenke in Form von elastischen Stegen vorgesehen, an denen eine Verkippung oder Drehung stattfindet.
Die Erfindung gestattet überraschend eine einstellbare und reproduzierbare Verkleinerung der Größe der Pinholeöffung ab Größe Null und dessen lichtdichten Verschluß ohne Kollisiongefahr der Folienkanten untereinander.
Die Erfindung wird nachstehend anhand der schematischen Zeichnungen näher erläutert.
Wenn im folgenden von Folienstücken oder Folienkanten gesprochen wird, geht es im wesentlichen um die bei der Pinholeöffnung und / oder Schließung gegenüberliegenden Kanten, während die übrige Form der Folienstücke je nach Platzbedarf und Ausführung variieren kann.

Es ist erfindungsgemäß vorgesehen ein einstellbares Pinhole für den Beleuchtungs- und/oder Detektionsstrahlengang eines Laser-Scanning-Mikroskopes, das mehrere Festkörpergelenke und zur Pinholeverstellung einen Schrittmotor aufweist, der über zwei gleichlaufende Spindeln mit unterschiedlicher Steigung eine von den mehreren Festkörpergelenken gehaltene Platte verschiebt, an der das Pinhole befestigt ist, wobei der Schrittmotorantrieb über ein Wegmeßsystem und/oder einen optischen Detektor zur Erfassung der durch das Pinhole hindurchtretenden Lichtmenge referenziert ist.

Das Folienmaterial kann beispielsweise Federstahl, Federbronze oder Aluminium von einer Dicke von beispielsweise 10 µm sein. Die Folienkanten können in einem Verbund, von beispielsweise 100 vorgefertigten Einzelfolien geschliffen, gestanzt und dann wieder getrennt oder auch im Anlieferzustand als Bandmaterial verwendet werden.

Fig..1 a zeigt schematisch eine Abbildung von L- förmig in einem vorzugsweise rechten Winkel angeordneten Folienstücken F1-F4 , wobei F1 und F2 sowie F3 und F4 jeweils an Verbindungspunkten V1, V2 fest miteinander verbunden sind.
Sie sind an ihren den Verbindungspunkten abgewandten Enden jeweils ortsfest (schwarz mit s gekennzeichnet) auf zueinander in Pfeilrichtung verschiebbaren Grundplatten P1 und P2 befestigt, und zwar auf jeder Platte so, daß sich die Pinholeöffnung beim synchronen Bewegen der Platten P1 und P2 in Pfeilrichtung punktförmig öffnet und schließt
Die Verbindung der Folien untereinander und mit den Platten P1 und P2 kann z.B. durch Kleben, Widerstandsschweißen, Diffusionschweißen oder Ultraschallschweißen erfolgen.

Durch die synchrone Verschiebung der Platten P1 und P2 in Pfeilrichtung wird erreicht, daß sich der Öffnungsbereich zwischen den an den Punkten V1, V2 verbundenen Folienkanten verkleinert oder vergrößert, und zwar wird bei Annäherung der Platten P1, P2 das Pinhole PH geöffnet und umgekehrt. Die Pinholeöffnung schließt sich hierbei vorzugsweise quadratisch bis zu einem Punkt. Bei weiterer Vergrößerung des Abstandes der Platten P1, P2 wird die Pinholeöffnung lichtdicht überdeckt, ohne daß sich die Folienkanten gegenseitig behindern oder beschädigen können.

Durch die Befestigung von jeweils zwei Folienkanten rechtwinklig übereinander ist gewährleistet, daß der durch sie gebildete rechte Winkel keinen Fertigungsproblemen unterliegt.
Ein Verhaken der Folienkanten wird dadurch ausgeschlossen, daß F3 auf F4 verkürzt befestigt ist und somit nicht mit der Folienkante von F2 in Berührung kommt.

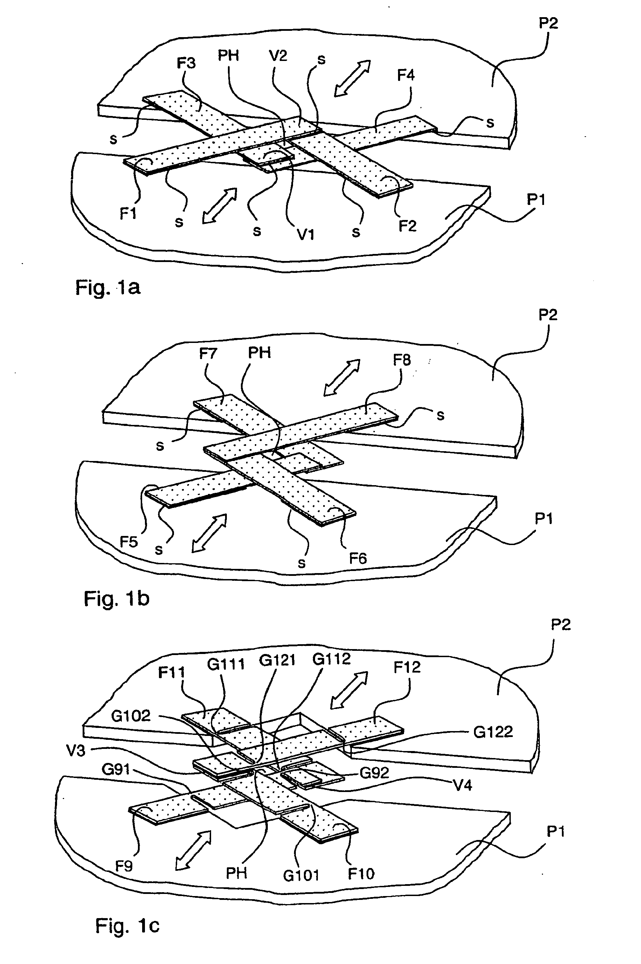

In Fig. 1 b ist eine weitere Variante der Erfindung dargestellt.
Sie besteht aus kreuzförmig angeordneten kreuzförmigen Folienkanten F5-F8 , die jeweils an den Platten P1 ( F5, F6) bzw. P2 ( F7, F8) befestigt sind, wobei wiederum zwei Platten P1, P2 in Pfeilrichtung zueinander verschiebbar sind, hier jedoch bei Annäherung von P1, P2 sich das Pinhole PH schließt und umgekehrt, weil sich F5-F8 und F6-F7 scherenartig übereinderschieben, da sie nicht miteinander verbunden sind.
Die Öffnung des Pinholes wird hier von den jeweils den Plattenkanten abgewandten Ecken der Foilienanordnungen gebildet.

In Fig. 1c ist eine weitere Variante der Erfindung dargestellt. Jede der Folienkanten F9, F10, F11, F12 weist zwei Gelenke auf, bevorzugt Festkörpergelenke. Der Abstand der Gelenkpunkte G91 zu G92, G101 zu G102, G111 zu G112 und G121 zu G122 sei vorzugsweise gleich und viel größer als die Pinholeöffnung. Die Folienpaare F9, F11 und F10, F12 sind jeweils L-förmig an Ihren Verbindungsstellen V3 und V4 verbunden und kreuzförmig so auf den Platten P1, P2 befestigt, daß beim synchronen Öffnen der Platten P1 und P2 in Pfeilrichtung die Pinholeöffnung punktförmig und vorzugeweise quadratisch schließt und umgekehrt. Das erfolgt dadurch, daß sich bei synchroner Vergrößerung des Abstandes der Platten P1, P2 in Pfeilrichtung die Gelenkpunkte G92 und G102, G112 und G121 senkrecht zur Pfeilrichtung aufeinander zu bewegen und die Pinholeöffnung schließen und umgekehrt. Hierbei öffnen und schließen sich die verbiegbaren Gelenkeinkerbungen an den Folien. Beim Öffnen und Schließen des Pinholes bleibt die Form der Pinholeöffnung annähernd quadratisch.
Bei Vergrößerung des Abstandes der Platten P1, P2 wird die Pinholeöffnung schließlich lichtdicht überdeckt, ohne daß sich die Folienkanten gegenseitig behindern oder zerstören können.

Ein Verhaken der Folienkanten wird dadurch ausgeschlossen, daß F9 auf F11 verkürzt befestigt ist und somit nicht mit der Folienkante F12 in Berührung kommt.

In Fig. 2 ist eine neue Ausführung dargestellt, wobei jeweils zwei Folienkanten F13, F14, F15, F16 paarweise leicht v-förmig zueinander stehen, d.h. einen kleinen Winkel zueinander einschließen . In Fig. 2a wird das eine Folienpaar zum anderen bezüglich seiner Mittenachse zwischen den Einzelfolien vorzugsweise in Pfeilrichtung senkrecht zueinander synchron verschoben.
Eine senkrechte Verschiebung zueinander, vorzugsweise durch synchrone Bewegung beider Folienpaare über zwei Motoren (nicht dargestellt) ergibt große Stellwege bei der Einstellung der Pinholeöffnung mit hoher Genauigkeit, so daß ggf. auf Wegmeßsysteme verzichtet werden kann.
In Fig. 2b wird der leicht V förmige Öffnungswinkel zwischen den Folienkanten variiert, indem die Folien F17 und F18 um die Achsen A1 und A2 und die Folien F19 und F20 um die Achsen A3 und A4 gegensinnig und vorzugsweise synchron zum Öffnen und Schleißen der Pinholeöffung verdreht werden.
In Fig. 2c befinden sich die Drehachsen A5, A6 und A7, A8 auf den entgegengesetzten Seiten der Folienpaare F21, F22 und F23, F24. Die Drehung der Folien erfolgt vorzugsweise synchron und gleichsinnig.

In Fig. 3 ist eine Anordnung zur Pinholeeinstellung dargestellt, die sich auf Anordnung der Folienkanten gemäß Fig. 1 a bezieht. Die Verschiebung der Platten P1, P2 kann jedoch analog bei Anwendung der Folienkantenanordnung gemäß Fig. 1 b, c erfolgen.

Hier ist ein lediglich an der Platte P1 drehgesicherter Schrittmotor SM dargestellt, der Spindeln SP1 und SP2 antreibt, die Gewinde mit unterschiedlichen Steigungen aufweisen und die über Muttern M1 und M2, eine Bewegung des mit P1 und P2 verbundenen Führungsteiles F1 senkrecht zur Verstellbewegung von P1, P2 bewirken. Die Teile F und P sind hierbei vorzugeweise aus einem Stück gefertigt und untereinander durch federnde Stege (Parallelfedergelenke) verbunden.

Die Fertigung der Teile kann z.B. durch Laserschneiden, Ätzen, Erodieren oder Stanzen erfolgen.
Der Schrittmotor SM ist zur Platte P1 drehgesichert und frei verschiebbar angeordnet. Er treibt synchron die Spindeln SP1 und SP2 an, die Gewinde mit unterschiedlichen Steigungen aufweisen.(z.B. ergibt sich mit den Gewinden M3x0, 5 und M2,6x0,45 eine Differenzsteigung von 50 µm).
Spindel SP 2 schraubt sich, angetrieben durch Schrittmotor SM, in die am Rahmen F2 befestigte Mutter M2. Der drehgesicherte Schrittmotor SM verschiebt sich daraufhin entlang der Achse A um die Spindelverschiebung in die Pfeilrichtung.

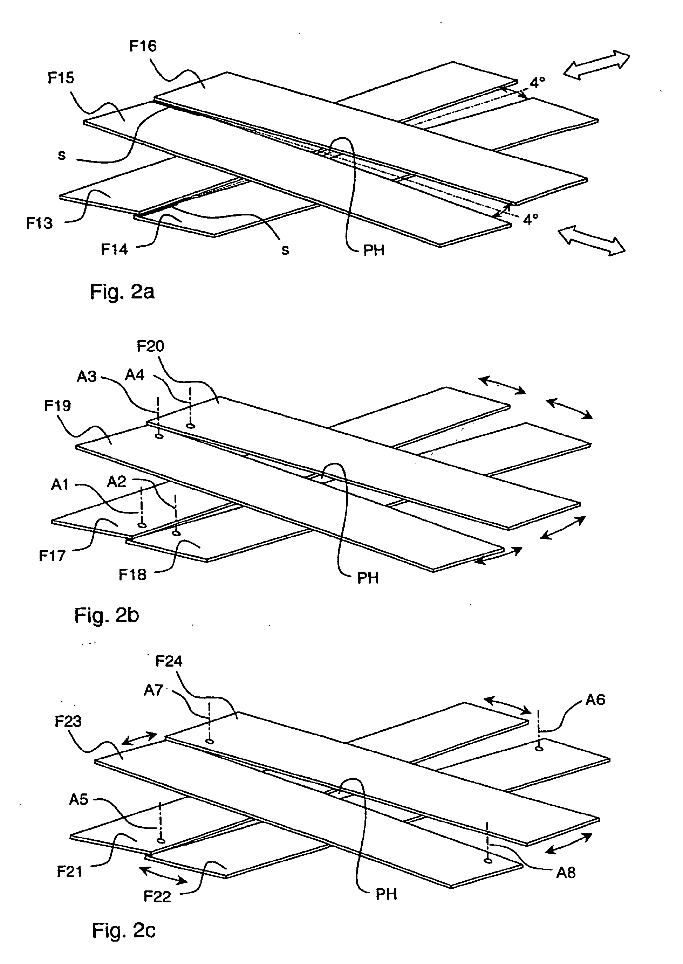

Mutter M1, die am Führungsteil F1 befestigt ist, verschiebt sich aufgrund des Differenzgewindes um einen Betrag, der ca. 10 mal kleiner ist als der des Schrittmotors SM, zur Mutter M2. Das bewirkt eine sehr hohe Feinfühligkeit bei der Verstellung von F1.
Am Führungsteil F1 , das durch Federstege (Parallelfedergelenk) mit dem Rahmen verbunden ist, sind die schrägen Federstege ST5, ST6 befestigt, die beim Drehen der Motorwelle sich spreitzen oder schließen und die Platten P1, P2 und damit das Pinhole öffnen oder schließen.
Während der Rahmen F2 über mehrere Stege ST1-ST4 (2 Parallelfedergelenke) mit den Platten P1, P2 zu deren Parallelführung verbunden ist, sind die Platten P1, P2 mit F1 jeweils über federnd gelagerte Stege ST5, ST6 verbunden, die schräg zur Verschieberichtung von P1 und P2 und schräg zu F1, F2 angeordnet sind.
Hierdurch wird erreicht, daß eine Verschiebung von F1 in Pfeilrichtung in eine hierzu senkrechte und antiparallele Verschiebung der Platten P1 und P2 umgewandelt wirdund die resultierende Verstellung der Pinholeöffnung gemäß Fig. 1 oder 2 erfolgt.

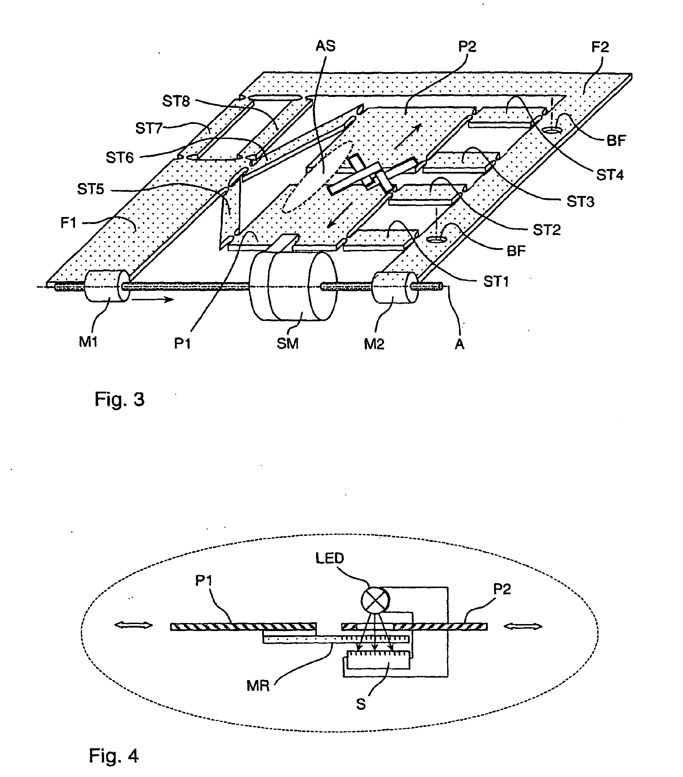

In Fig. 3 ist schematisch ein Ausbruch AS dargestellt, in dem sich einWegmeßsystem befinden kann , wie es in Fig.4 beispielhaft dargestellt ist. Es mißt die Relativbewegung der Platten P1, P2 zueinander und damit die Größe der Diagonalen der Pinholeöffnung.
Fest auf Platte P2 ist eine Lichtquelle LED angeordnet, der ebenfalls auf P2 gegenüber ein ortsauflösender Sensor S zugeordnet ist, der die Bewegung eines mit der zu P2 beweglichen Platte P1 verbundenen Maßstabes MR, hier ein transparenter Rastermaßstab, anhand der erfaßten Rasterveränderung erfaßt. Derartige Meßsysteme sind handelsüblich mit einer Genauigkeit ab 0,1 µm erhältlich. Solche handelsüblichen Meßsysteme ermöglichen zusätzlich die Referenzierung des Schrittmotorantriebes.
Anhand der erfaßten Relativbewegung der Platten P1, P2 kann dadurch on - line die Erfassung der tatsächlichen Pinholeöffnung erfaßt werden und auch mit einer optischen Messung bei verschiedenen Pinholeöffnungszuständen korreliert werden. Eine Referenzierung des Schrittmotorantriebes kann in einfacher Weise auch dadurch erfolgen, daß ein zusätzlicher, nicht dargestellter optischer Detektor das im Moment der Öffnung der Pinholeöffnung von einer nicht dargestellten Lichtquelle durch die Pinhoteöffnung hindurchtretende Licht erfaßt und in diesem Moment die Referenzierung des Schrittmotrantriebes hochgenau auslöst.

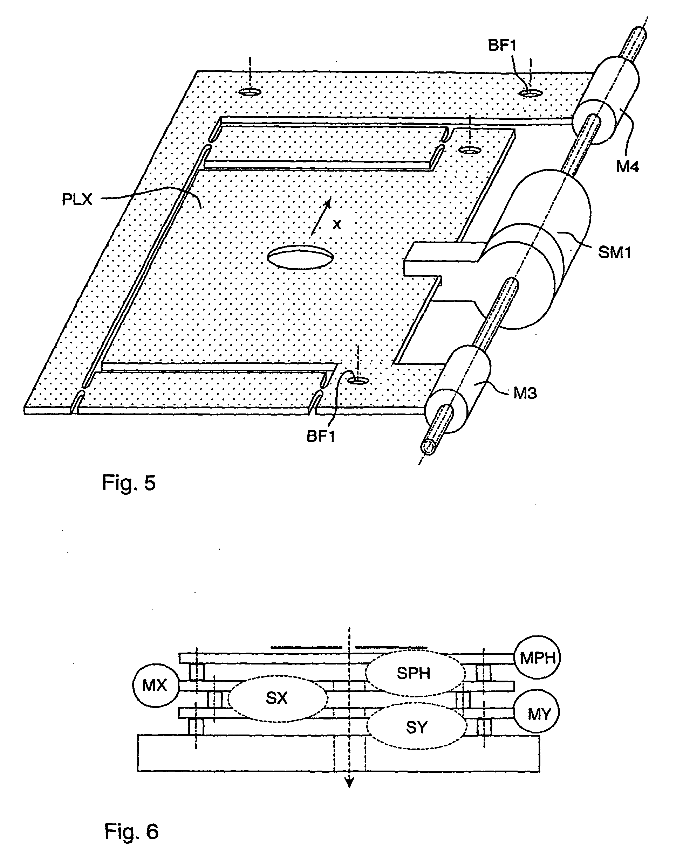

In Fig. 5 ist ein Spindeltrieb , bestehend aus einem Schrittmotor SM1 und Muttern M3, M4 dargestellt, der eine Bewegung einer Platte PLX in X - Richtung gewährleistet. Diese Platte ist beispielsweise über Befestigungspunkte BF1 mit Befestigungspunkten BF auf der Verschiebeeinrichtung gemäß Fig. 4 verbunden, so daß die gesamte Pinholeanordnung gemäß Fig. 4 in X - Richtung - und mit einer weiteren Anordnung , die mit der Anordnung gemäß Fig.5 verbunden sein kann, auch in Y- Richtung verschiebbar ist.. Hierdurch ist eine X- und Y - Verschiebung des Pinholes senkrecht zur optischen Achse, beispielsweise zu Zentrierungszwecken, gewährleistet.

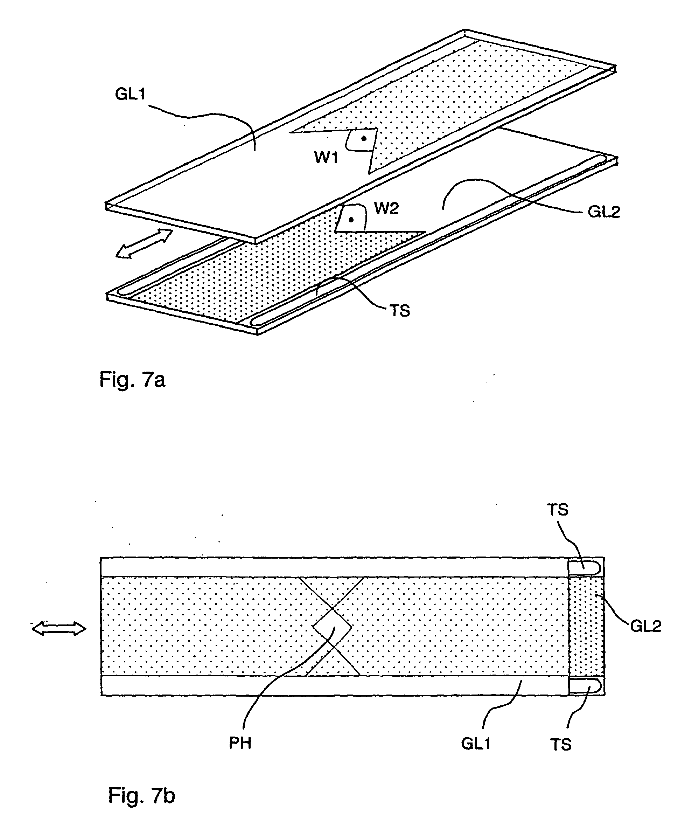

In Fig. 7 sind zwei zueinander verschiebliche dünne Glasplatten GL1, GL2, beispielsweise Objektträger eines Mikroskopes , dargestellt, die zueinander in Pfeilrichtung verschieblich sind und, beispielsweise über einen hochgenauen lithografischen Prozeß, jeweils teilweise beschichtet sind. Die Beschichtung ist hierbei für GL1 und GL2 spiegelsymmetrisch so ausgeführt, daß jeweils ein vorzugsweise rechtwinkliger und scharfkantiger Winkel W1, W2 der Beschichtung freibleibt und bei übereinanderliegenden Platten GL1, GL2das Pinhole PH bildet. Damit die Platten nicht direkt aufeinander abgleiten, was zu Beschädigungen der Beschichtung führen kann, können an den Rändern außerhalb des Wirkbereiches des Pinholes PH dünne Teflonstreifen TS auf mindestens einer Platte vorgesehen sein, die ein reibungsarmes Abgleiten gewährleisten und vorzugsweise in Richtung der Verschiebung orientiert sind. Teflon gleitet nur auf einer glatten Glasoberfläche fast ideal abreibfrei. Deshalb soll sich im Bereich der Teflonschichten keine Chromschicht auf den Glasplatten befinden.
Zur Vermeidung von Reflexionsverlusten an den einander zugewandten Flächen der Glasplatten GL1 und GL2 kann zwischen den Glasplatten eine Immersionsflüssigkeit eingebracht werden.

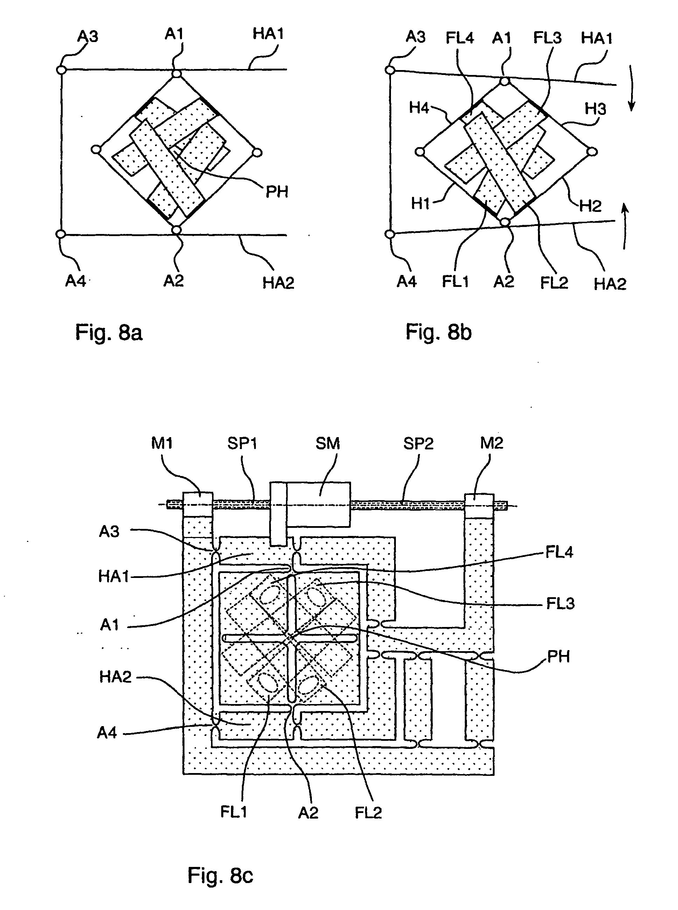

In Fig. 8 ist eine weitere Ausführung eines einstellbaren Pinholes dargestellt, bestehend aus an Hebelgelenken H1 -H4 angeordneten Folien FL1-FL4. Die Anordnung bezieht sich auf eine Anordnung der Folienkanten nach Fig. 2c.

Die Hebelgelenke H1-H4, die vorzugsweise gleichlang sind, sind miteinander gelenkig verbunden und bilden einen verstellbaren Rhombus. Die Verstellung erfolgt an den Punkten A1, A2 über ein Zusammenführen oder Auseinanderziehen von mit A1 und A2 verbundenen Hebelarmen HA1, HA2, die an Drehpunkten A3, A4 gelagert sind.

Werden beispielsweise HA1 und HA2 zueinander bewegt (Pfeilrichtung in Fig. 8b), kommte es zu folgenden Drehbewegungen:
FL1 entgegen dem Uhrzeigersinn
FL2 im Uhrzeigersinn
FL3 entgegen dem Uhrzeigersinn
FL4 im Uhrzeigersinn, so daß sich jeweils zwei Folien FL zueinander bewegen und damit das Pinhole geschlossen wird.

Beim Auseinanderziehen von HA1 und HA2 geschieht das Gegenteil.

In Fig. 8c ist eine komplette Anordnung dargestellt, in der mit einer Anordnung analog zu Fig. 3 mittels eines einzigen Schrittmotors SM eine Pinholeverstellung erfolgen kann.

## Patentansprüche

1. Einstellbares Pinhole für den Beleuchtungs- und/oder Detektionsstrahlengang eines Laser-Scanning-Mikroskopes, das mehrere Festkörpergelenke und zur Pinholeverstellung einen Schrittmotor aufweist, der zwei gleichlaufende Spindeln antreibt, wobei über ein Wegmeßsystem und/oder einen optischen Detektor zur Erfassung der durch das Pinhole hindurchtretenden Lichtmenge eine Referenzierung des Schrittmotorantriebes erfolgt und mehrere Platten mit den Festkörpergelenken zur Ausbildung des Pinholes verbunden sind, die vom Schrittmotor angetrieben und Abschnitte haben, die mit unterschiedlicher Steigung verschiebbar sind.

2. Einstellbares Pinhole nach Anspruch 1, das zwei teilweise beschichtete, transparente, gegeneinander verschiebliche Träger aufweist, wobei die Beschichtungen Winkelsegmente aufweisen, die gemeinsam das Pinhole begrenzen.

3. Einstellbares Pinhole, wobei zwei teilweise beschichtete transparente Träger gegeneinander verschoben werden und die Beschichtungen Winkelsegmente aufweisen, die gemeinsam das Pinhole begrenzen.

4. Einstellbares Pinhole nach Anspruch 6, wobei zwischen den Trägern Teflonstreifen und/ oder eine Immersionsflüssigkeit vorgesehen ist.

5. Einstellbares Pinhole für den Beleuchtungs- und/oder Detektionsstrahlengang eines Laser-Scanning-Mikroskopes, wobei die Pinholeöffnung durch zueinander verstellbare Folienkanten begrenzt wird.

6. Einstellbares Pinhole nach Anspruch 5, wobei mindestens zwei Folien mit jeweils mindestens einer geraden Kante so zueinander angeordnet werden und / oder miteinander verbunden sind, daß ihre Kanten eine L-Form beschreiben und die L-förmigen Verbindungsstücke so aufeinander angeordnet werden, daß sie einen rhombischen oder quadratischen Lichtdurchtritt umgrenzen und sie zueinander zur Pinholeverstellung bewegt werden.

7. Einstellbares Pinhole nach Anspruch 5, wobei die Bewegungsrichtung in Richtung der Winkelhalbierenden des durch die L-Form aufgespannten Winkels oder eines anderen innerhalb des aufgespannten Winkels liegenden Winkels erfolgt.

8. Einstellbares Pinhole nach Anspruch 5, wobei mindestens zwei Folien mit jeweils mindestens einer geraden Kante so verbunden werden, daß ihre Kanten einen kleinen Winkel, vorzugsweise um 4 Grad zueinander, aufweisen und zwei derartige Folienpaare zueinander senkrecht oder in einem Winkel zur Pinholeverstellung verschoben werden.

9. Einstellbares Pinhole nach Anspruch 5, wobei mindestens zwei Folien mit jeweils mindestens einer geraden Kante so stehen, daß ihre Kanten einen kleinen Winkel , vorzugsweise um 4 Grad zueinander aufweisen und zwei derartige Folienpaare jeweils zueinander gegensinnig oder gleichsinnig verdreht werden.

10. Einstellbares Pinhole nach Anspruch 5, mit einer zueinander verstellbaren Hebelanordnung, wobei zwischen ersten Hebeln eine rhombische Anordnung aus mindestens vier zueinander verstellbaren zweiten Hebeln angeordnet ist, die jeweils ein Folienstück mit einer schräg zum Hebelverlauf angeordneten Folienkante tragen

11. Einstellbares Pinhole nach einem der Ansprüche 5 bis 10, wobei die Folien Festkörpergelenke aufweisen.

12. Einstellbares Pinhole nach einem der Ansprüche 5 bis 11, wobei zur Verstellung der Folienkanten motorisch antreibbare Festkörpergelenke vorgesehen sind.

13. Einstellbares Pinhole nach einem der Ansprüche 5 bis 12, wobei eine Verstellung mittels eines Schrittmotors erfolgt, der über mindestens zwei gleichlaufende Spindeln, vorzugsweise mit unterschiedlicher Steigung verschiebbare Platten antreibt, an denen die Folien befestigt sind.

14. Einstellbares Pinhole nach einem der Ansprüche 5 bis 13, wobei über ein Wegmeßsystem und/oder einen optischen Detektor zur Erfassung der durch das Pinhole hindurchtretenden Lichtmenge eine Referenzierung des Schrittmotorantriebes erfolgt.

15. Einstellbares Pinhole nach einem der vorangehenden Ansprüche, wobei das Pinhole so schließbar ist, daß sich die Folien überlappen.

16. Einstellbares Pinhole nach einem der vorangehenden Ansprüche, wobei mindestens ein Folienpaar zum Kollisionsschutz eine Versetzung aufweist.
